# EUROPÄISCHE PATENTSCHRIFT

(11) **EP 2 440 436 B1**
(45) Veröffentlichungstag und Bekanntmachung des Hinweises auf die Patenterteilung: **31.07.2019**
(21) Anmeldenummer: 10718101.8
(22) Anmeldetag: 07.04.2010
(51) Int. Cl.: B60T 8/36, F16K 31/06

(54) **VENTILPATRONE FÜR EIN MAGNETVENTIL UND ZUGEHÖRIGES MAGNETVENTIL**
VALVE CARTRIDGE FOR A MAGNET VALVE, AND A CORRESPONDING MAGNET VALVE
CARTOUCHE DE VANNE POUR UNE ELECTROVANNE ET ÉLECTROVANNE ASSOCIÉE

(30) Priorität: 09.06.2009 DE 102009026850
(43) Veröffentlichungstag der Anmeldung: 18.04.2012
(73) Patentinhaber: Robert Bosch GmbH, 70442 Stuttgart (DE)
(72) Erfinder: FRICKE-SCHMIDT, Joerg, Charleston 294182906 (US)
(86) Internationale Anmeldenummer: PCT/EP2010/054587
(87) Internationale Veröffentlichungsnummer: WO 2010/142476

(56) Entgegenhaltungen:
- EP-A1- 1 101 678
- DE-A1- 10 104 241
- DE-A1-102007 053 134

## Beschreibung

### Stand der Technik

Die Erfindung betrifft eine Ventilpatrone für ein Magnetventil nach der Gattung des unabhängigen Patentanspruchs 1, und ein zugehöriges Magnetventil.

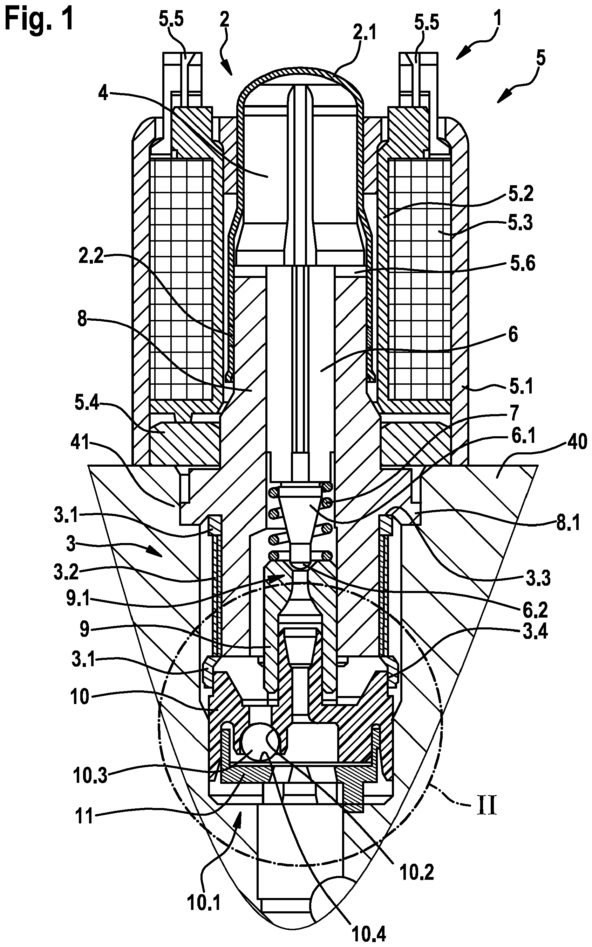

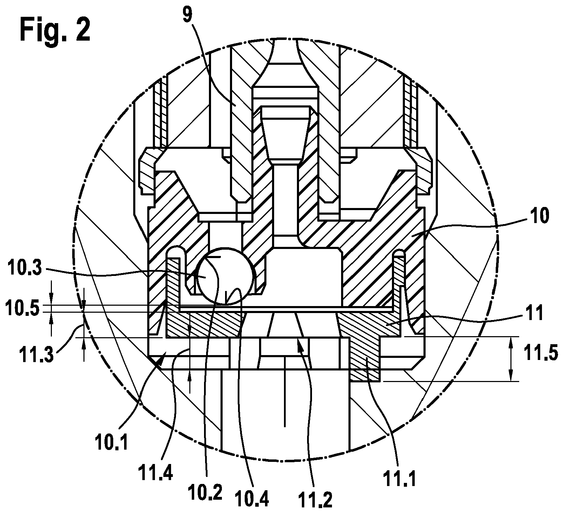

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Fig. 1 und 2 dargestellt. Wie aus Fig. 1 und 2 ersichtlich ist, umfasst das herkömmliche Magnetventil 1, das beispielsweise als stromlos offenes Regelventil ausgeführt ist, eine Magnetbaugruppe 5 zur Erzeugung eines Magnetflusses, die einen Gehäusemantel 5.1, einen Wicklungsträger 5.2, eine Spulenwicklung 5.3 und eine Abdeckscheibe 5.4 umfasst, und eine Ventilpatrone 2, die eine Kapsel 2.1, einen mit einem ersten Ende in die Kapsel 2.1 eingeschobenen Ventileinsatz 8, einen Magnetanker 4 mit einem Stößel 6 und eine Rückstellfeder 7 umfasst. Bei der Herstellung des herkömmlichen Magnetventils 1 werden die Kapsel 2.1 und der Ventileinsatz 8 der Ventilpatrone 2 durch Pressen aufeinander gefügt, und durch eine Dichtschweißung 2.2 wird die Ventilpatrone 2 hydraulisch gegenüber der Atmosphäre abgedichtet. Zusätzlich nimmt der Ventileinsatz 8 die im hydraulischen System auftretenden Druckkräfte auf und leitet diese über einen Verstemmflansch 8.1 an einen Verstemmbereich 41 eines Fluidblocks 40 weiter.

Die Magnetbaugruppe 5 erzeugt durch eine Bestromung der Spulenwicklung 5.3 über elektrischen Anschlüsse 5.5 eine Magnetkraft, die den längsbeweglichen Magnetanker 4 mit dem Stößel 6, der ein Schließelement 6.1 mit einem Hauptdichtelement 6.2 umfasst, entgegen der Kraft der Rückstellfeder 7 gegen den Ventileinsatz 8 bewegt, wobei der Stößel 6 und die Rückstellfeder 7 in einer Innenbohrung des Ventileinsatzes 8 geführt sind. Der Ventileinsatz 8 leitet den von der Magnetbaugruppe 5 über die Abdeckscheibe 5.4 eingeleiteten Magnetfluss axial über einen Luftspalt 5.6 in Richtung Magnetanker 4. Zudem nimmt der Ventileinsatz 8 an einem zweiten Ende den so genannten Ventilkörper 9 auf, der einen Hauptventilsitz 9.1 umfasst, in welchen das als Dichtkalotte ausgeführte Hauptdichtelement 6.2 dichtend eintaucht, um die Dichtfunktion des Magnetventils 1 umzusetzen. Zudem ist bei dem dargestellten Magnetventil 1 ein komplett gespritzter Ringfilter 3 mit Trägerelement 3.1 und Filterelement 3.2 zum Filtern von Schmutzpartikeln so konstruiert/montiert, dass zugehörige Dichtstellen 3.3, 3.4 direkt zwischen dem Ringfilter 3 und der Magnetventil 1 angeordnet sind, um Bypässe zu vermeiden. Hierbei dichtet der Ringfilter 3 über eine obere Dichtstelle 3.3 axial gegen den Ventileinsatz 8 und über eine untere Dichtstelle 3.4 radial an das angrenzende Bauteil, hier ein Ventilunterteil 10 ab.

Wie weiter aus Fig. 1 und 2 ersichtlich ist, wird an den Ventileinsatz 8 axial das Ventilunterteil 10 angelegt und abgestützt, das ein exzentrisch zur Ventilhauptachse angeordnetes Rückschlagventil 10.1 mit einem Rückschlagventilsitz 10.2 und einem Rückschlagventilschließelement 10.3 umfasst. Das beispielsweise als Kunststoffeinsatz ausgeführte Ventilunterteil 10 dient zusätzlich zur Abdichtung zum umgebenden Fluidblock 40, zur Abdichtung zum Ventilkörper 9 und zur Aufnahme eines Flachfilters 11 mit einem Einlegesieb 11.2. Hierbei wird der Rückschlagventilsitz 10.2 in das Ventilunterteil 10 eingebracht und ein Öffnungshub 10.5 des Rückschlagventilschließelements 10.3, das hier als Kugel ausgeführt ist, ist durch eine am Flachfilter 11 angeordnete Anlagekontur 10.4 begrenzt.

Wie aus Fig. 1 und 2 weiter ersichtlich ist, ist die Anlagekontur 10.4 für das Rückschlagventilschließelement 10.3 am Flachfilter 11 oberhalb des Einlegesiebs 11.2 angeordnet. Somit wird entweder der Öffnungshub 10.5 des Rückschlagventilschließelements 10.3 oder eine axiale Toleranzausgleichslänge 11.4 um das Maß einer Wandstärke 11.3 der Anlagekontur 10.4 verringert. Dadurch ist es schwierig optimale Volumenströme am Rückschlagventil 10.1 oder neue Konstruktionskonzepte für das Magnetventil (Hülsentechnologie) mit größeren axialen Toleranzausgleichsmöglichkeiten zu realisieren. Zur Realisierung der a-axialen Toleranzausgleichslänge 11.4 sind an den Flachfilter 11 Füße 11.1 angeformt, die eine vorgegebene Länge 11.5 aufweisen. Dabei muss beachtet werden, dass nicht die komplette Länge 11.5 der Flachfilterfüße 11.1 zum axialen Toleranzausgleich verwendet werden kann, da gestauchtes Material der Flachfilterfüße 11.1 im Bereich des Toleranzausgleiches verbleibt. Der Kunststoffflachfilter 11 ist mit dem angrenzenden Ventilunterteil 10 verbunden, um die Montage und das Handling des kompletten Magnetventils 1 in der Produktion zu gewährleisten. Bei der dargestellten Magnetventilkonstruktion taucht dabei ein Ringsteg des Flachfilters 11 in eine umlaufende Ringnut des Ventilunterteils 10 ein. Der Ringsteg wird dabei teilweise oder partiell in der Ringnut radial zu einer Verliersicherung verpresst.

Die DE 101 04 241 A1 offenbart eine Ventilanordnung, insbesondere für schlupfgeregelte Kraftfahrzeugbremsanlagen. Die offenbarte Ventilanordnung umfasst einen ersten Ventilaufnahmekörper, welcher derart an einen Innendurchmesser eines zweiten Ventilaufnahmekörpers angepasst ist, dass der erste Ventilaufnahmekörper so weit spielfrei im zweiten Ventilaufnahmekörper eingefügt ist, dass sich ein erstes Ventilschließglied entweder an einer Bohrungsstufe eines zweiten Druckmitteldurchlasses oder am ersten Ventilaufnahmekörper abstützt. Der erste Ventilaufnahmekörper ist von einem in die Ventilaufnahmebohrung von unten eingesetzten Plattenfilter zusätzlich gesichert, so dass ein Herausfallen des ersten Ventilaufnahmekörpers und des ersten Ventilschließgliedes aus der Ventilanordnung vermieden ist. Zudem umfasst der Plattenfilter ein Filtersieb, welches im unteren Teil der Wandstärke des Flachfilters angeordnet ist.

Die EP 1 101 678 A1 offenbart ein Magnetventil mit einem Rückschlagventil. Das Magnetventil umfasst ein zwischen einem Druckmitteleinlass und einem Druckmittelauslass angeordnetes Sitzventil und im Bypass zu diesem ein Rückschlagventil mit einem Quadring als Schließkörper und einer Kreisringfläche als Ventilsitz. Hierzu ist in einer Aufnahmebohrung eines Ventilblocks ein den Bohrungsquerschnitt ausfüllendes Ventilbauteil aufgenommen, welches mit einem zentralen Ansatz passend in den Ventilkörper eingreift. Das aus Kunststoff gespritzte Ventilbauteil hat einen in seiner Längsachse verlaufenden Durchlass, der ansatzabgewandt in eine kreiszylindrische Ausnehmung übergeht. Gegen den Druckmitteleinlass der Aufnahmebohrung hin ist die Ausnehmung durch eine Ringscheibe und eine Filterscheibe in einem ansatzabgewandt auf das Ventilbauteil aufgesteckten Abschlussteil abgeschlossen, der die Ringscheibe in ihrer Lage sichert. Hierbei dient die Ringscheibe als Anlagekontur für den Schließkörper des Rückschlagventils und liegt auf dem Abschlussteil auf, wobei die Filterscheibe im unteren Teil der Wandstärke des Abschlussteils angeordnet ist.

Die DE 10 2007 053 134 A1 offenbart eine Ventilpatrone für ein Magnetventil mit einer Kapsel, einem Ventileinsatz, der mit einem ersten Ende in die Kapsel eingeschoben ist und der am anderen Ende einen Ventilkörper mit einem Hauptventilsitz aufnimmt, einem Ventilunterteil, das sich axial am Ventileinsatz abstützt, und einem Rückschlagventil, das einen Rückschlagventilsitz und ein Rückschlagventilschließelement umfasst, wobei ein Flachfilter zum Filtern von Schmutzpartikeln mit dem Ventilunterteil verbunden ist, wobei der Rückschlagventilsitz im Ventilunterteil eingebracht ist und wobei ein Öffnungshub des Rückschlagventilschließelements durch eine am Flachfilter angeordnete Anlagekontur begrenzt ist.

### Offenbarung der Erfindung

Die erfindungsgemäße Ventilpatrone für ein Magnetventil mit den Merkmalen des unabhängigen Patentanspruchs 1 hat demgegenüber den Vorteil, dass eine Anlagekontur für das Rückschlagventilschließelement auf Höhe ein im Flachfilter eingelegten Filtersiebs angeordnet ist. Durch diese Anordnung der Anlagekontur ist es möglich, sowohl einen Öffnungshub des Rückschlagventilschließelements möglichst groß auszuführen, um Durchflussanforderungen erfüllen zu können, und gleichzeitig eine optimale Funktion eines axialen Toleranzausgleiches im Flachfilter umzusetzen, so dass möglichst große axiale Toleranzwege durch den Flachfilter aufgenommen werden können. Durch erfindungsgemäße Ausführungsformen wird der Öffnungshub des Rückschlagventilschließelements oder der axiale Toleranzausgleich in vorteilhafter Weise nicht mehr um das Maß der Wandstärke der Anlagekontur verringert. Dadurch kann in vorteilhafter Weise zusätzlicher Raum für das gestauchte Material von Füßen des Flachfilters beim axialen Toleranzausgleich gewonnen werden.

Der wesentliche Vorteil der erfindungsgemäßen Ventilpatrone besteht darin, dass durch die bauraumoptimierte Umgestaltung des Ventilunterteils und des Flachfilters die Umsetzung eines Kosten sparenden Magnetventils in Hülsentechnologie ermöglicht wird. Diese Art von Magnetventilen weist designbedingt größere Axialtoleranzen im unteren Magnetventilbereich auf, die konstruktiv durch die erfindungsgemäße Anordnung der Anlagekontur ausgeglichen werden können.

Ein erfindungsgemäßes Magnetventil umfasst eine Magnetbaugruppe und eine erfindungsgemäße Ventilpatrone mit einer Kapsel, einem Ventileinsatz, der mit einem ersten Ende in die Kapsel eingeschoben ist und der am anderen Ende einen Ventilkörper mit einem Hauptventilsitz aufnimmt, einem Ventilunterteil, das sich axial am Ventileinsatz abstützt, und einem Rückschlagventil, das einen Rückschlagventilsitz und ein Rückschlagventilschließelement umfasst, wobei ein Flachfilter mit einem eingelegten Filtersieb zum Filtern von Schmutzpartikeln mit dem Ventilunterteil verbunden ist, und wobei der Rückschlagventilsitz im Ventilunterteil eingebracht ist und wobei ein Öffnungshub des Rückschlagventilschließelements durch eine am Flachfilter angeordnete Anlagekontur begrenzt ist, die auf Höhe des im Flachfilter eingelegten Filtersiebs angeordnet ist, wobei innerhalb der Ventilpatrone ein Magnetanker beweglich geführt ist, der von einer von der Magnetbaugruppe erzeugten Magnetkraft bewegbar ist und einen innerhalb des Ventileinsatzes geführten Stößel bewegt, der ein Schließelement mit einem Dichtelement aufweist, wobei das Dichtelement zur Ausführung einer Dichtfunktion dichtend in den Hauptventilsitz des Ventilkörpers eintaucht. Ausführungsformen der Erfindung können grundsätzlich für alle stromlos offenen und stromlos geschlossenen Magnetventile eingesetzt werden.

Durch die in den abhängigen Ansprüchen aufgeführten Maßnahmen und Weiterbildungen sind vorteilhafte Verbesserungen der im unabhängigen Patentanspruch angegebenen Ventilpatrone möglich.

Besonders vorteilhaft ist, dass der Flachfilter mindestens einen Filterfuß mit einer vorgegebenen Filterfußlänge aufweist. Hierbei kann der mindestens eine Filterfuß für einen axialen Toleranzausgleich gestaucht werden. Das gestauchte Material des mindestens einen Filterfußes wird beispielsweise von einem unterhalb des Filtersiebs angeordneten Ausgleichsraum aufgenommen. Zudem umfasst eine Länge des Ausgleichsraums eine Wandstärke der Anlagekontur des Rückschlagventilschließelements. Somit wird zusätzlich mehr Raum, der dem Maß der Wandstärke der Anlagekontur entspricht, für das gestauchte Material der Flachfilterfüße beim axialen Toleranzausgleich gewonnen. Dadurch wird in vorteilhafter Weise die Umsetzung von neuen Magnetventilkonzepten, wie beispielsweise einer Hülsentechnologie möglich, die kostengünstiger hergestellt werden können, aber größere axiale Toleranzausgleichsmöglichkeiten erfordern.

In Ausgestaltung der erfindungsgemäßen Ventilpatrone ist das Ventilunterteil als Kunststoffspritzteil mit einer im Wesentlichen gleich bleibenden Wandstärke ausgeführt. Durch die gleich bleibende Wandstärke im Ventilunterteil können Fehlstellen (Lunker) im spritzgießtechnisch hergestellten Kunststoffbauteil vermieden und Zykluszeiten bei der Herstellung des Ventilunterteils, d.h. Taktzeiten eines Spritzvorganges im Spritzwerkzeug des Ventilunterteils optimiert werden.

In weiterer Ausgestaltung der erfindungsgemäßen Ventilpatrone ist der Ventileinsatz als einteilige geschlitzte Hülse ausgeführt, und der Ventilkörper ist als haubenförmige Hülse ausgeführt, die so in ein zweites Ende des als geschlitzte Hülse ausgeführten Ventileinsatzes eingepresst ist, dass der Hauptventilsitz innerhalb des Ventileinsatzes angeordnet ist. Dadurch können der Ventileinsatz und der Ventilkörper in vorteilhafter Weise durch kostengünstige Verfahren bei konstant bleibender Leistungsfähigkeit der Ventilpatrone hergestellt werden. So kann der als einteilige geschlitzte Hülse ausgeführte Ventileinsatz beispielsweise durch Einrollen eines Blechstreifens hergestellt werden, und der Ventilkörper kann beispielsweise als haubenförmiges Tiefziehteil hergestellt werden.

In weiterer Ausgestaltung der erfindungsgemäßen Ventilpatrone ist die Kapsel als zur Atmosphäre dichtendes Ventilbauteil ausgeführt und über eine Verstemmbuchse an einem Verstemmbereich mit dem Fluidblock verstemmt. Dadurch übernimmt die Kapsel auch die Dichtfunktion ab der Verstemmung der Ventilpatrone im Fluidblock. Da die Kapsel auch die Dichtfunktion nach außen vom Ventileinsatz übernimmt, kann die Ventilmontage in vorteilhafter Weise vereinfacht werden, so dass eine Dichtschweißung zwischen der Kapsel und dem Ventileinsatz nicht mehr erforderlich ist.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine detaillierte Schnittdarstellung eines Abschnittes des herkömmlichen Magnetventils aus Fig. 1.
Fig. 3 zeigt eine schematische Schnittdarstellung eines Ausführungsbeispiels einer erfindungsgemäßen Ventilpatrone für ein Magnetventil.
Fig. 4 zeigt eine detaillierte Schnittdarstellung eines Abschnittes der erfindungsgemäßen Ventilpatrone aus Fig. 3.

### Ausführungsformen der Erfindung

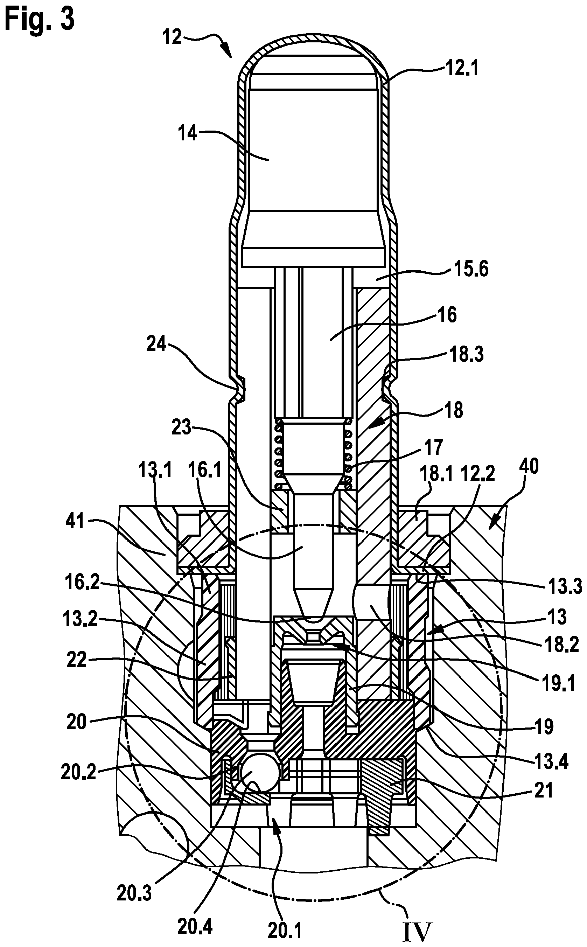

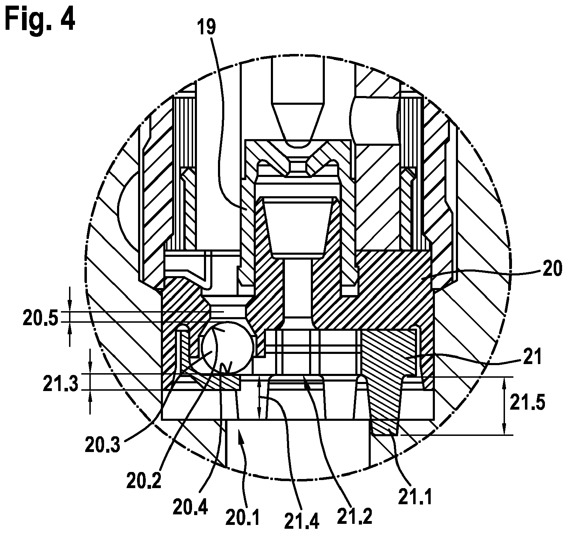

Wie aus Fig. 3 und 4 ersichtlich ist, umfasst ein Ausführungsbeispiel einer erfindungsgemäßen Ventilpatrone 12 für ein Magnetventil eine Kapsel 12.1, einen innerhalb der Kapsel 12.1 beweglich geführten Magnetanker 14, einen Ventileinsatz 18, der mit einem ersten Ende in die Kapsel 12.1 eingeschoben ist, und einen Ventilkörper 19 mit einem Hauptventilsitz 19.1. Innerhalb des Ventileinsatzes 18 ist ein Stößel 16 längsbeweglich geführt, der ein Schließelement 16.1 mit einem Dichtelement 16.2 aufweist, das zur Ausführung einer Dichtfunktion dichtend in den Hauptventilsitz 19.1 des Ventilkörpers 19 eintaucht. Der Stößel 16 kann von dem Magnetanker 14 gegen die Kraft einer Rückstellfeder 17 innerhalb des Ventileinsatzes 18 bewegt werden, wobei der Magnetanker 14 von einer Magnetkraft bewegt wird, die von einer nicht dargestellten Magnetbaugruppe erzeugt wird. Die Magnetbaugruppe kann beispielsweise analog zur Magnetbaugruppe 5 des herkömmlichen Magnetventils 1 gemäß Fig. 1 ausgeführt werden.

Wie aus Fig. 3 weiter ersichtlich ist, ist die Kapsel 12.1 als zur Atmosphäre hin dichtendes Ventilbauteil in Richtung Verstemmbereich 41 mit einem Fluidblock 40 verlängert ausgeführt. Daher werden die Verstemmkräfte nicht mehr vom Ventileinsatz 18, sondern von einer Verstemmbuchse 18.1 aufgenommen. Die Verstemmgeometrie wird so weit optimiert, dass ein Verstemmprozess eingeführt werden kann, der eine reduzierte Verstemmkraft zulässt; dadurch können die Verformungskräfte reduziert werden, die auf die Verstemmbuchse 18.1 und die Kapsel 12.1 einwirken. Zudem ist der Ventileinsatz 18 als einteilige geschlitzte Hülse ausgeführt. Der als einteilige geschlitzte Hülse ausgeführte Ventileinsatz 18 kann beispielsweise durch Einrollen eines Blechstreifens hergestellt werden. Im dargestellten Ausführungsbeispiel weist eine Innenbohrung des Ventileinsatzes 18 eine vollkommene oder sehr stark angenäherte Kreisform auf, in welcher der Stößel 16 geführt wird. Zum Ausgleich des Volumens, das der Stößel 16 bei seiner durch den von der Magnetbaugruppe eingeleiteten Magnetfluss bewirkten Axialbewegung verdrängt, und zur Entlüftung bzw. Befüllung, ist in den Stößel 16 mindestens eine axial verlaufende Volumenausgleichsnut eingearbeitet. Alternativ kann die mindestens eine Volumenausgleichsnut jedoch auch in die Innenbohrung des Ventileinsatzes 18 eingearbeitet werden. Bei einer alternativen nicht dargestellten Ausführungsform der erfindungsgemäßen Ventilpatrone kann beispielsweise mindestens eine axial verlaufende Volumenausgleichsnut in den Ventileinsatz 18 eingearbeitet und durch die Form der Innenbohrung des Ventileinsatzes vorgegeben werden.

Wie aus Fig. 3 und 4 weiter ersichtlich ist, ist der Ventilkörper 19 als haubenförmige Hülse ausgeführt. Der als Hülse ausgeführte Ventilköper 19 ist beispielsweise als Tiefziehteil ausgeführt und wird über einem Einpressbereich so in ein zweites Ende des als geschlitzte Hülse ausgeführten Ventileinsatzes 18 eingepresst, dass der Hauptventilsitz 19.1 innerhalb des Ventileinsatzes 18 angeordnet ist. Über einen Entkoppelbereich ist der Hauptventilsitz 19.1 im Ventilkörper 19 vom Einpressbereich entkoppelt, um eine Verformung des Hauptventilsitzes 19.1 durch den Einpressvorgang des Ventilkörpers 19 in den Ventileinsatz 18 zu verhindern.

Die hydraulischen Kräfte werden von dem als geschlitzte Hülse ausgeführten Ventileinsatz 18 aufgenommen. Um ein Aufweiten des Ventileinsatzes 18 durch das Einpressen des Ventilkörpers 19 zu verhindern, ist im dargestellten Ausführungsbeispiel ein Armierungsring 22 auf das zweite Ende des Ventileinsatzes 18 aufgepresst. Der aufgepresste Armierungsring 22 vergrößert in vorteilhafter Weise die Gestaltfestigkeit des Ventileinsatzes 18 beim Einpressen des Ventilkörpers 19. Bei einer alternativen nicht dargestellten Ausführungsform der erfindungsgemäßen Ventilpatrone 12 können die Stöße des als geschlitzte Hülse ausführten Ventileinsatzes 18 mindestens am zweiten Ende des Ventileinsatzes 18 miteinander verbunden werden, um die Gestaltfestigkeit des Ventileinsatzes 18 beim Einpressen des Ventilkörpers 19 zu vergrößern. Die Stöße des als geschlitzte Hülse ausführten Ventileinsatzes 18 können beispielsweise durch Schweißen und/oder Kleben und/oder Verzahnen miteinander verbunden werden.

Im dargestellten Ausführungsbeispiel der erfindungsgemäßen Ventilpatrone 12 kann ein maximaler Hub des Stößels 16 durch ein axiales Verschieben des Ventileinsatzes 18 innerhalb der Kapsel 12.1 eingestellt werden. Ein minimaler Luftspalt 15.6 zwischen dem Magnetanker 14 und dem Ventileinsatz 18 kann durch axiales Verschieben des Ventilkörpers 19 innerhalb des Ventileinsatzes 18 mit eingelegtem Anker 14 eingestellt werden. Der eingestellte Luftspalt 15.6 kann durch eine Crimpverbindung 24 zwischen der Kapsel 12.1 und dem Ventileinsatz 18 festgelegt werden, wobei der Ventileinsatz 18 zur Herstellung der Crimpverbindung 24 mit einer umlaufenden Nut 18.3 ausgeführt werden kann. Somit wird durch die Crimpverbindung 24 sichergestellt, dass der Arbeitsluftspalt 15.6 erhalten bleibt, wobei zusätzlich die hydraulisch wirkenden Kräfte aufgenommen werden können. Die Form der umlaufenden Nut 18.3 kann zur Erhöhung der axialen Haltekräfte der Crimpverbindung zwischen Kapsel 12.1 und Ventileinsatz 18 geometrisch verändert und angepasst werden.

Wie aus Fig. 3 weiter ersichtlich ist, ist die Rückstellfeder 17 für den Stößel 16 außerhalb des Strömungsbereichs angeordnet, wobei sich die Rückstellfeder 17 auf einer Federauflage 23 abstützt, die im dargestellten Ausführungsbeispiel als in den Ventileinsatz 18 eingeführte Spannhülse ausgeführt ist. Durch die Verlegung der Rückstellfeder 17 aus dem durchströmten Bauraum können der Verschleiß am Stößel 16 reduziert und der Durchfluss zwischen dem Hauptventilsitz 19.1 und entsprechenden in den Ventileinsatz 18 eingebrachten Radialbohrungen 18.2 erhöht werden.

Wie weiter aus Fig. 3 oder 4 ersichtlich ist, ist ein als Kunststoffeinsatz ausgeführtes Ventilunterteil 20 axial an den Ventileinsatz 18 angelegt und abgestützt, wobei das Ventilunterteil 20 über einen Dom dichtend in einen Innenraum des Ventilkörpers 19 eingeschoben ist und mit der Außenkontur gegen den umgebenden Fluidblock 40 abdichtet. Ein Ringfilter 13 mit Trägerelement 13.1 und Filterelement 13.2 zum Filtern von Schmutzpartikeln ist dichtend an die Ventilpatrone 12 angebunden. Der Ringfilter 13 ist als Kunststoffspritzteil mit einer oberen Dichtstelle 13.3 und einer unteren Dichtstelle 13.4 ausgeführt. Hierbei dichtet die obere Dichtstelle 13.3 einen gefilterten Fluidfluss axial gegen den an die Kapsel 12.1 angeformten Kragen 12.2 ab. Die untere Dichtstelle 13.4 dichtet den gefilterten Fluidfluss axial gegen den Fluidblock 40 ab, in welchem die Ventilpatrone 12 verstemmt ist. Zudem umfasst das dargestellte Ventilunterteil 20 ein exzentrisch angeordnetes Rückschlagventil 20.1 mit einem Rückschlagventilsitz 20.2 und einem beispielsweise als Kugel ausgeführten Rückschlagventilschließelement 20.3, das eine richtungsorientierte Durchflussfunktion ausführt. Zusätzlich nimmt das Ventilunterteil 20 einen Flachfilter 21 mit mehreren Filterfüßen 21.1, die eine vorgegebene Länge 21.5 aufweisen, und einem Einlegesieb 21.2 auf. Hierbei wird der Rückschlagventilsitz 20.2 in das Ventilunterteil 20 eingebracht und ein Öffnungshub 20.5 des Rückschlagventilschließelements 20.3 ist durch eine am Flachfilter 21 angeordnete Anlagekontur 20.4 begrenzt. Wie aus Fig. 3 und 4 weiter ersichtlich ist, ist die Anlagekontur 20.4 für das Rückschlagventilschließelement 20.3 am Flachfilter 21 auf Höhe des Einlegesiebs 21.2 angeordnet. Damit wird der Mangel der herkömmlichen Designs behoben, d.h. der Öffnungshub des Rückschlagventilschließelements 20.3 oder eine Länge 21.4 eines Ausgleichsbereichs für einen axialen Toleranzausgleich wird nicht mehr um das Maß einer Wandstärke 21.3 der Anlagekontur 20.4 verringert. Somit wird im dargestellten Ausführungsbeispiel bei gleich bleibendem Öffnungshub 20.5 des Rückschlagventilschließelements 20.3 zusätzlich mehr Raum, der dem Maß der Wandstärke 21.3 der Anlagekontur 20.4 des Rückschlagventilschließelements 20.3 entspricht, für das gestauchte Material der Flachfilterfüße 21.1 beim axialen Toleranzausgleich gewonnen. Dadurch ist es in vorteilhafter Weise möglich, optimale Volumenströme am Rückschlagventil 20.1 und/oder das neue Konstruktionskonzept für das Magnetventil (Hülsentechnologie) mit größeren axialen Toleranzausgleichsmöglichkeiten zu realisieren. Zur Realisierung der axialen Toleranzausgleichslänge 21.4 weisen die an den Flachfilter 21 angeformten Füße 21.1, die vorgegebene Länge 21.5 auf, wobei beachtet werden muss, dass nicht die komplette Länge 21.5 der Flachfilterfüße 21.1 zum axialen Toleranzausgleich verwendet werden kann, da das gestauchte Material der Flachfilterfüße 21.1 im Bereich des Toleranzausgleiches verbleibt. Der Kunststoffflachfilter 21 ist mit dem angrenzenden Ventilunterteil 20 verbunden, um die Montage und das Handling des kompletten Magnetventils in der Produktion zu gewährleisten. Bei der dargestellten Magnetventilkonstruktion entfallen durch entsprechende Haltemittel zur Verbindung des Flachfilters 21 mit dem Ventilunterteil 20 ein bisher im herkömmlichen Ventilunterteil 10 verwendeter C-Steg und ein zur Befestigung verwendeter umlaufender Ringsteg des herkömmlichen Flachfilters 11. Durch diese bauraumoptimierte Umgestaltung des Ventilunterteils 20 und des Flachfilters 21 kann dadurch weiterer axialer Bauraum im unteren Magnetventilbereich eingespart werden. Die dadurch stark verkürzt umlaufende Ringnut im Ventilunterteil 20 wird nicht mehr zur Haltefunktion des Flachfilters 21 genutzt. Die Klemmverbindung zwischen dem Flachfilter 21 und dem Ventilunterteil 20 kann beispielsweise über am Flachfilter 21 angeordnete Haltelaschen realisiert werden, die in korrespondierende Nutsegmente im Ventilunterteil 20 eintauchen und somit jeweils eine partielle Klemmverbindung herstellen.

Der wesentliche Vorteil der Erfindung besteht darin, dass durch die bauraumoptimierte Umgestaltung des Ventilunterteils 20 und des Flachfilters 21 eine Kosten sparende Ausführung der Ventilpatrone 12 in Hülsentechnologie ermöglicht wird. Durch die Ausführung der Ventilpatrone 12 in Hülsentechnologie treten designbedingt größere Axialtoleranzen im unteren Magnetventilbereich auf, die konstruktiv unter anderem auch durch die erfindungsgemäße Anordnung der Anlagekontur 20.4 und des Einlegesiebs 21.2 ausgeglichen werden können.

Durch die erfindungsgemäße Ventilpatrone können einzelne Komponenten stark vereinfacht werden, so dass in vorteilhafter Weise auch die korrespondierenden Herstellprozesse vereinfacht und kostengünstiger ausgeführt werden können. Zudem kann sich durch die Hülsenbauweise der erfindungsgemäßen Ventilpatrone in vorteilhafter Weise eine verringerte Bauhöhe des Magnetventils über dem Fluidblock ergeben, was sich positiv auf das Aggregatboxvolumen auswirken kann. Des Weiteren kann sich auch innerhalb des Fluidblocks eine verringerte Bauhöhe des Magnetventils ergeben, wodurch die Dicke des Fluidblocks verringert werden kann, so dass sich weitere Vorteile im Bezug auf das Gewicht und das Aggregatboxvolumen ergeben können.

## Patentansprüche

1. Ventilpatrone für ein Magnetventil mit einer Kapsel (12.1), einem Ventileinsatz (18), der mit einem ersten Ende in die Kapsel (12.1) eingeschoben ist und der am anderen Ende einen Ventilkörper (19) mit einem Hauptventilsitz (19.1) aufnimmt, einem Ventilunterteil (20), das sich axial am Ventileinsatz (18) abstützt, und einem Rückschlagventil (20.1), das einen Rückschlagventilsitz (20.2) und ein Rückschlagventilschließelement (20.3) umfasst, wobei ein Flachfilter (21) zum Filtern von Schmutzpartikeln mit dem Ventilunterteil (20) verbunden ist, und wobei der Rückschlagventilsitz (20.2) im Ventilunterteil (20) eingebracht ist und wobei ein Öffnungshub (20.5) des Rückschlagventilschließelements (20.3) durch eine am Flachfilter (21) angeordnete Anlagekontur (20.4) begrenzt ist, **dadurch gekennzeichnet, dass** die Anlagekontur (20.4) für das Rückschlagventilschließelement (20.3) auf Höhe eines im Flachfilter (21) eingelegten Filtersiebs (21.2) angeordnet ist.

2. Ventilpatrone nach Anspruch 1, **dadurch gekennzeichnet, dass** der Flachfilter (21) mindestens einen Filterfuß (21.1) mit einer vorgegebenen Filterfußlänge (21.5) aufweist.

3. Ventilpatrone nach Anspruch 2, **dadurch gekennzeichnet, dass** der mindestens eine Filterfuß (21.1) für einen axialen Toleranzausgleich stauchbar ist.

4. Ventilpatrone nach Anspruch 3, **dadurch gekennzeichnet, dass** ein unterhalb des Filtersiebs (21.2) angeordneter Ausgleichsraum das gestauchte Material des mindestens einen Filterfußes (21.1) aufnimmt, wobei eine Länge (21.4) des Ausgleichsraums eine Wandstärke (21.3) der Anlagekontur (20.4) des Rückschlagventilschließelements (20.3) umfasst.

5. Ventilpatrone nach einem der Ansprüche 1 bis 4, **dadurch gekennzeichnet, dass** das Ventilunterteil (20) als Kunststoffspritzteil mit einer im Wesentlichen gleich bleibenden Wandstärke ausgeführt ist.

6. Ventilpatrone nach einem der Ansprüche 1 bis 5, **dadurch gekennzeichnet, dass** der Ventileinsatz (18) als einteilige geschlitzte Hülse ausgeführt ist, und der Ventilkörper (19) als haubenförmige Hülse ausgeführt ist, wobei der als Hülse ausgeführte Ventilköper (19) so in ein zweites Ende des als geschlitzte Hülse ausgeführten Ventileinsatzes (18) eingepresst ist, dass der Hauptventilsitz (19.1) innerhalb des Ventileinsatzes (18) angeordnet ist.

7. Ventilpatrone nach einem der Ansprüche 1 bis 6, **dadurch gekennzeichnet, dass** die Kapsel (12.1) als zur Atmosphäre dichtendes Ventilbauteil ausgeführt und über eine Verstemmbuchse (18.1) an einem Verstemmbereich (41) mit dem Fluidblock (40) verstemmt ist.

8. Magnetventil mit einer Magnetbaugruppe (5) und einer Ventilpatrone (12), wobei innerhalb der Ventilpatrone (12) ein Magnetanker (14) beweglich geführt ist, der von einer von der Magnetbaugruppe (5) erzeugten Magnetkraft bewegbar ist und einen innerhalb des Ventileinsatzes (15) geführten Stößel (16) bewegt, der ein Schließelement (16.1) mit einem Dichtelement (16.2) aufweist, wobei das Dichtelement (16.2) zur Ausführung einer Dichtfunktion dichtend in den Hauptventilsitz (19.1) des Ventilkörpers (19) eintaucht, **dadurch gekennzeichnet, dass** die Ventilpatrone (12) nach einem der Ansprüche 1 bis 7 ausgeführt ist.

## Claims

1. Valve cartridge for a magnet valve having a capsule (12.1), a valve core (18), a first end of which is inserted into the capsule (12.1) and the other end of which receives a valve body (19) having a main valve seat (19.1), a lower valve part (20), which is axially supported on the valve core (18), and a nonreturn valve (20.1) comprising a nonreturn valve seat (20.2) and a nonreturn valve closing element (20.3), wherein a flat filter (21) for filtering dirt particles is connected to the lower valve part (20), and wherein the nonreturn valve seat (20.2) is placed in the lower valve part (20), and wherein an opening stroke (20.5) of the nonreturn valve closing element (20.3) is limited by an abutment contour (20.4) arranged on the flat filter (21), **characterized in that** the abutment contour (20.4) for the nonreturn valve closing element (20.3) is arranged at the level of a filter screen (21.2) inserted in the flat filter (21).

2. Valve cartridge according to Claim 1, **characterized in that** the flat filter (21) has at least one filter foot (21.1) with a predetermined filter foot length (21.5).

3. Valve cartridge according to Claim 2, **characterized in that** the at least one filter foot (21.1) can be upset for axial tolerance compensation.

4. Valve cartridge according to Claim 3, **characterized in that** a compensating space arranged underneath the filter screen (21.2) receives the upset material of the at least one filter foot (21.1), wherein a length (21.4) of the compensating space includes a wall thickness (21.3) of the abutment contour (20.4) of the nonreturn valve closing element (20.3).

5. Valve cartridge according to one of Claims 1 to 4, **characterized in that** the lower valve part (20) is embodied as a plastic injection molding having a substantially constant wall thickness.

6. Valve cartridge according to one of Claims 1 to 5, **characterized in that** the valve core (18) is embodied as a one-piece slotted sleeve, and the valve body (19) is embodied as a hood-shaped sleeve, wherein the valve body (19) embodied as a sleeve is pressed in such a way into a second end of the valve core (18) embodied as a slotted sleeve that the main valve seat (19.1) is arranged within the valve core (18).

7. Valve cartridge according to one of Claims 1 to 6, **characterized in that** the capsule (12.1) is embodied as a valve component which forms a seal with respect to the atmosphere and is caulked to the fluid block (40) in a caulking region (41) by means of a caulking bush (18.1).

8. Magnet valve having a magnet subassembly (5) and a valve cartridge (12), wherein a magnet armature (14) is guided movably within the valve cartridge (12), said armature being movable by a magnetic force produced by the magnet subassembly (5) and moving a plunger (16) guided within the valve core (15), said plunger having a closing element (16.1) with a sealing element (16.2), wherein the sealing element (16.2) enters the main valve seat (19.1) of the valve body (19) in a sealing manner in order to perform a sealing function, **characterized in that** the valve cartridge (12) is embodied in accordance with one of Claims 1 to 7.

## Revendications

1. Cartouche de vanne pour une électrovanne avec une capsule (12.1), un insert de vanne (18), qui est inséré par une première extrémité dans la capsule (12.1) et qui contient à l'autre extrémité un corps de vanne (19) avec un siège de vanne principal (19.1), une partie inférieure de vanne (20), qui s'appuie axialement sur l'insert de vanne (18), et un clapet anti-retour (20.1), qui comprend un siège de clapet anti-retour (20.2) et un élément de fermeture du clapet anti-retour (20.3), dans laquelle un filtre plat (21) est assemblé à la partie inférieure de vanne (20) pour filtrer des particules de boue, et dans laquelle une course d'ouverture (20.5) de l'élément de fermeture du clapet anti-retour (20.3) est limitée par un contour d'appui (20.4) disposé sur le filtre plat (21), **caractérisée en ce que** le contour d'appui (20.4) pour l'élément de fermeture du clapet anti-retour (20.3) est disposé à hauteur d'un tamis de filtre (21.2) introduit dans le filtre plat (21).

2. Cartouche de vanne selon la revendication 1, **caractérisée en ce que** le filtre plat (21) présente au moins un pied de filtre (21.1) avec une longueur de pied de filtre prédéterminée (21.5).

3. Cartouche de vanne selon la revendication 2, **caractérisée en ce que** ledit au moins un pied de filtre (21.1) peut être refoulé pour une compensation de tolérance axiale.

4. Cartouche de vanne selon la revendication 3, **caractérisée en ce qu'**une chambre de compensation disposée en dessous du tamis de filtre (21.2) contient la matière refoulée dudit au moins un pied de filtre (21.1), dans laquelle une longueur (21.4) de la chambre de compensation comprend une épaisseur de paroi (21.3) du contour d'appui (20.4) de l'élément de fermeture du clapet anti-retour (20.3).

5. Cartouche de vanne selon l'une quelconque des revendications 1 à 4, **caractérisée en ce que** la partie inférieure de vanne (20) est formée par une pièce en matière synthétique moulée par injection avec une épaisseur de paroi restant essentiellement constante.

6. Cartouche de vanne selon l'une quelconque des revendications 1 à 5, **caractérisée en ce que** l'insert de vanne (18) est formé par une douille fendue en une pièce, et le corps de vanne (19) est formé par une douille en forme de hotte, dans laquelle le corps de vanne (19) réalisé sous forme de douille est pressé dans une deuxième extrémité de l'insert de vanne (18) réalisé sous forme de douille fendue, de telle manière que le siège de vanne principal (19.1) soit situé à l'intérieur de l'insert de vanne (18).

7. Cartouche de vanne selon l'une quelconque des revendications 1 à 6, **caractérisée en ce que** la capsule (12.1) est formée par un élément de vanne étanche par rapport à l'atmosphère et est matée avec le bloc de fluide (40) sur une zone de matage (41) au moyen d'une douille de matage (18.1).

8. Electrovanne avec un sous-groupe d'aimants (5) et une cartouche de vanne (12), dans laquelle un noyau d'aimant (14) est guidé de façon mobile à l'intérieur de la cartouche de vanne (12), est déplaçable au moyen d'une force magnétique produite par le sous-groupe d'aimants (5) et déplace un poussoir (16) guidé à l'intérieur de l'insert de vanne (15), qui présente un élément de fermeture (16.1) avec un élément d'étanchéité (16.2), dans laquelle l'élément d'étanchéité (16.2) plonge de façon étanche dans le siège de vanne principal (19.1) du corps de vanne (19) pour assurer une fonction d'étanchéité, **caractérisée en ce que** la cartouche de vanne (12) est réalisée selon l'une quelconque des revendications 1 à 7.
